# EUROPEAN PATENT APPLICATION

(11) **EP 4 346 308 A1**
(43) Date of publication of application: **03.04.2024**
(21) Application number: 23189165.6
(22) Date of filing: 02.08.2023
(51) Int. Cl.: H04W 72/23, H04W 74/00

(54) **SMALL DATA TRANSMISSION OPTIMIZATION USING RANDOM ACCESS CHANNEL FOR REDUCED CAPABILITY USER EQUIPMENT**

(30) Priority: 30.09.2022 US 202263411882 P
(71) Applicant: Nokia Technologies Oy, 02610 Espoo (FI)
(72) Inventor: RATASUK, Rapeepat, Inverness, IL (US); KHLASS, Ahlem, Massy (FR); HATHIRAMANI, Navin, Coppell, TX (US)
(74) Representative: Nokia EPO representatives

(57) **Abstract**

Systems, methods, apparatuses, and computer program products for sharing PRACH and PUSCH resources when performing RA-based SDT procedures. One method may include receiving, from a network entity, a configuration indicating physical uplink shared channel resources; determining PUSCH resources based on at least one of reduced bandwidth or reduced PRBs; adjusting at least one characteristic of a PRB allocation based on the PUSCH resources and reduced bandwidth; and performing data communication based on the adjusted at least one characteristic of the PRB allocation.

## Description

### TECHNICAL FIELD:

Some example embodiments may generally relate to mobile or wireless telecommunication systems, such as 3^{rd} Generation Partnership Project (3GPP) Long Term Evolution (LTE), 5^{th} generation (5G) radio access technology (RAT), new radio (NR) access technology, 6^{th} generation (6G), and/or other communications systems. For example, certain example embodiments may relate to systems and/or methods for sharing physical random access channel (PRACH) and physical uplink shared channel (PUSCH) resources when performing random access channel (RACH) small data transmission (SDT) procedures, such as for reduced capability (RedCap) devices.

### BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the radio access network (RAN) for 5G, which may provide radio access for NR, LTE, and LTE-A. It is noted that the nodes in 5G providing radio access functionality to a user equipment (*e.g.,* similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

### SUMMARY:

In accordance with some example embodiments, a method may include receiving, by a user equipment, from a network entity, a configuration indicating physical uplink shared channel resources. The method may further include determining physical uplink shared channel resources based on at least one of reduced bandwidth or reduced physical resource blocks. The method may further include adjusting at least one characteristic of a physical resource block allocation based on the physical uplink shared channel resources and reduced bandwidth. The method may further include performing data communication based on the adjusted at least one characteristic of the physical resource block allocation.

In accordance with certain example embodiments, an apparatus may include means for receiving, from a network entity, a configuration indicating physical uplink shared channel resources. The apparatus may further include means for determining physical uplink shared channel resources based on at least one of reduced bandwidth or reduced physical resource blocks. The apparatus may further include means for adjusting at least one characteristic of a physical resource block allocation based on the physical uplink shared channel resources and reduced bandwidth. The apparatus may further include means for performing data communication based on the adjusted at least one characteristic of the physical resource block allocation.

In accordance with various example embodiments, a non-transitory computer readable medium may include program instructions that, when executed by an apparatus, cause the apparatus to perform at least a method. The method may include receiving, by a user equipment, from a network entity, a configuration indicating physical uplink shared channel resources. The method may further include determining physical uplink shared channel resources based on at least one of reduced bandwidth or reduced physical resource blocks. The method may further include adjusting at least one characteristic of a physical resource block allocation based on the physical uplink shared channel resources and reduced bandwidth. The method may further include performing data communication based on the adjusted at least one characteristic of the physical resource block allocation.

In accordance with some example embodiments, a computer program product may perform a method. The method may include receiving, by a user equipment, from a network entity, a configuration indicating physical uplink shared channel resources. The method may further include determining physical uplink shared channel resources based on at least one of reduced bandwidth or reduced physical resource blocks. The method may further include adjusting at least one characteristic of a physical resource block allocation based on the physical uplink shared channel resources and reduced bandwidth. The method may further include performing data communication based on the adjusted at least one characteristic of the physical resource block allocation.

In accordance with certain example embodiments, an apparatus may include at least one processor and at least one memory storing instructions that, when executed by the at least one processor, cause the apparatus at least to receive, from a network entity, a configuration indicating physical uplink shared channel resources. The at least one memory and instructions, when executed by the at least one processor, may further cause the apparatus at least to determine physical uplink shared channel resources based on at least one of reduced bandwidth or reduced physical resource blocks. The at least one memory and instructions, when executed by the at least one processor, may further cause the apparatus at least to adjust at least one characteristic of a physical resource block allocation based on the physical uplink shared channel resources and reduced bandwidth. The at least one memory and instructions, when executed by the at least one processor, may further cause the apparatus at least to perform data communication based on the adjusted at least one characteristic of the physical resource block allocation.

In accordance with various example embodiments, an apparatus may include receiving circuitry configured to receive, from a network entity, a configuration indicating physical uplink shared channel resources. The apparatus may further include determining circuitry configured to determine physical uplink shared channel resources based on at least one of reduced bandwidth or reduced physical resource blocks. The apparatus may further include adjusting circuitry configured to adjust at least one characteristic of a physical resource block allocation based on the physical uplink shared channel resources and reduced bandwidth. The apparatus may further include communication circuitry configured to perform data communication based on the adjusted at least one characteristic of the physical resource block allocation.

In accordance with some example embodiments, a method may include transmitting, to a user equipment, a configuration indicating usage of physical uplink shared channel resources with reduced bandwidth.

In accordance with certain example embodiments, an apparatus may include means for transmitting, to a user equipment, a configuration indicating usage of physical uplink shared channel resources with reduced bandwidth.

In accordance with various example embodiments, a non-transitory computer readable medium may include program instructions that, when executed by an apparatus, cause the apparatus to perform at least a method. The method may include transmitting, to a user equipment, a configuration indicating usage of physical uplink shared channel resources with reduced bandwidth.

In accordance with some example embodiments, a computer program product may perform a method. The method may include transmitting, to a user equipment, a configuration indicating usage of physical uplink shared channel resources with reduced bandwidth.

In accordance with certain example embodiments, an apparatus may include at least one processor and at least one memory storing instructions that, when executed by the at least one processor, cause the apparatus at least to transmit, to a user equipment, a configuration indicating usage of physical uplink shared channel resources with reduced bandwidth.

In accordance with various example embodiments, an apparatus may include transmitting circuitry configured to transmit, to a user equipment, a configuration indicating usage of physical uplink shared channel resources with reduced bandwidth.

### BRIEF DESCRIPTION OF THE DRAWINGS:

For a proper understanding of example embodiments, reference should be made to the accompanying drawings, wherein:
FIG. 1 illustrates an example of a 2-step RACH-based SDT procedure.
FIG. 2 illustrates an example of significant PRACH and PUSCH overhead required for separate MsgA configurations.
FIG. 3 illustrates an example of sharing PUSCH between RedCap user equipment according to various example embodiments.
FIG. 4 illustrates an example of a signaling diagram according to certain example embodiments.
FIG. 5 illustrates an example of a flow diagram of a method according to various example embodiments.
FIG. 6 illustrates an example of a flow diagram of another method according to various example embodiments.
FIG. 7 illustrates an example of various network devices according to some example embodiments.
FIG. 8 illustrates an example of a 5G network and system architecture according to certain example embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for sharing PRACH and PUSCH resources when performing random access procedure (2-step or 4-step random access procedure) or SDT procedure is not intended to limit the scope of certain example embodiments, but is instead representative of selected example embodiments.

3GPP Release (Rel)-17 specified various capabilities for RedCap user equipment (UE), some of which are shown in Table 1 below:

| **Category** | **Frequency Range 1 (FR1) (cmWave)** | **Frequency Range 2 (FR2) (mmWave)** |
|---|---|---|
| Device Bandwidth | 20 MHz | 100 MHz |
| Antenna | lTx-lRx | |
| Configuration | 1Tx-2Rx (optional) | |
| Downlink MIMO Support | Yes for device with 2Rx branches | |
| Duplex Operation | FD-FDD, HD-FDD, TDD | TDD |
| Maximum Modulation | DL: 256-QAM (optional), 64-QAM mandatory | DL: 64-QAM |
| | UL: 64-QAM | UL: 64-QAM |
| Peak Data Rate | FD-FDD, 1Rx: 85 Mbps DL/91 Mbps UL | TDD 50:50 DL/UL split, 1Rx: 213 Mbps DL, 228 Mbps UL |
| | TDD 50:50 DL/UL split, 1Rx: 42 Mbps DL, 45 Mbps UL | |

3GPP Rel-18 is contemplating further device complexity reduction in frequency range (FR)1 to accommodate lower-tier devices between massive IoT and 3GPP Rel-17 RedCap devices. For example, the supported peak data rate for UE Rel-18 devices may be approximately 10 Mbps. Such device complexity reduction techniques may be based on factors such as how the network, UE, and specifications would be impacted, as well as supporting the coexistence of 3GPP Rel-17 RedCap, 3GPP Rel-18 RedCap, non-RedCap UEs within the same cell. Some techniques to reduce device complexity may include reducing UE bandwidth down to 5MHz in FR1, possibly in combination with relaxed UE processing timelines for physical downlink shared channel (PDSCH), PUSCH, and/or channel state information (CSI). In addition, device complexity may be reduced by reducing UE peak data rates in FR1, including restricting bandwidth for PDSCH and/or PUSCH, and again, in combination with relaxed UE processing timelines for PDSCH, PUSCH, and/or CSI.

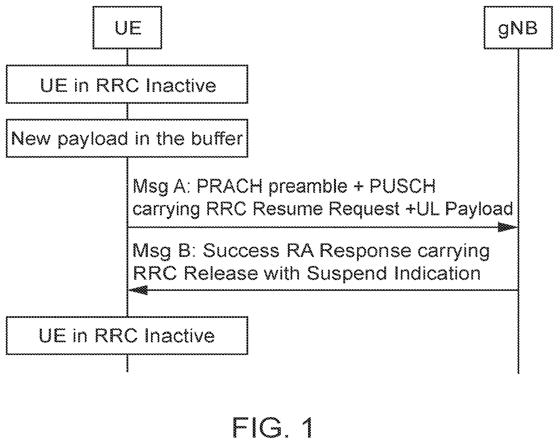

NR Rel-16 introduced 2-step RACH as a technique to reduce latency of RACH procedures, which was then adopted in Rel-17 for SDT. SDT procedure may be performed either by random access procedure (*i.e*., "2-step RACH-based SDT" procedure (as illustrated in FIG. 1 or "4-step RACH-based SDT") or by configured grant Type 1. In addition to reducing latency, the 2-step RACH-based SDT procedure can reduce UE power consumption, and may be ideal for RedCap IoT devices that require infrequent and/or small uplink transmission (*e.g*., reporting, updates, keepalive (KA) messages).

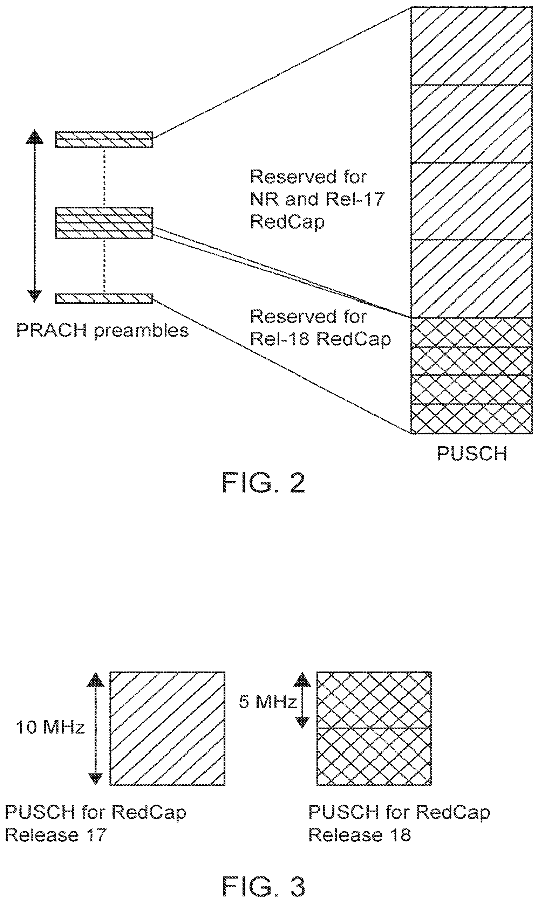

In the 2-step RACH-based SDT procedure, the base station (*e.g*., gNB) may configure MsgA (*i.e.*, Msg1 + Msg3) resources for use by the RedCap UE (*e.g.,* PRACH and PUSCH) via a system information block (SIB)1 (*i.e.,* via radio resource control (RRC) parameter *msgA-ConfigCommon*). PUSCH configurations may include parameters such as bandwidth part (BWP), modulation and coding scheme (MCS), a number of slots, time & frequency domain resources, demodulation reference signal (DMRS), and power control. Since Rel-18 RedCap UE use bandwidth of 5 MHz (*e.g*., RF or baseband bandwidth), the UE may be unable to share the PUSCH with Rel-17 RedCap UE if the configured PUSCH region is larger than 5 MHz. However, configuring separate PRACH and PUSCH regions for Rel-17 and Rel-18 RedCap UE may significantly increase the required overhead, as shown in FIG. 2. Thus, it is desirable to allow Rel-18 RedCap UE to share the same PRACH and PUSCH resources with Rel-17 RedCap UE when performing 2-step RACH-based SDT procedures.

Certain example embodiments described herein may have various benefits and/or advantages to overcome the disadvantages described above. For example, certain example embodiments may enable the sharing of resources between 3GPP Rel-17 and Rel-18 RedCap UE, resulting in lower control overhead (*e.g.*, PRACH/PUSCH overhead), as well as improved system efficiency. In addition, various example embodiments may reduce SIB1 overhead saving and/or facilitate coexistence between 3GPP Rel-17 and Rel-18 RedCap UE. Thus, certain example embodiments discussed below are directed to improvements in computer-related technology.

In various example embodiments discussed below, uplink (UL) grants for PUSCH in MsgA may be reserved for all RedCap UEs, but may be processed differently by Rel-17 RedCap UEs and Rel-18 RedCap UEs (*i.e*., enhanced RedCap or eRedCap UEs), including eRedCap UE in a RRC inactive state performing RACH-based or configured grant-based SDT. However, various example embodiments may also apply to any eRedCap UE in a RRC Idle/Inactive that intends to use legacy RACH procedure, wherein the information on access for eRedCap UE may be provided in a release message (*e.g.*, RRC Release). As an example, FIG. 3 depicts how 10 MHz PUSCH may be shared between Rel-17 and Rel-18 RedCap UEs.

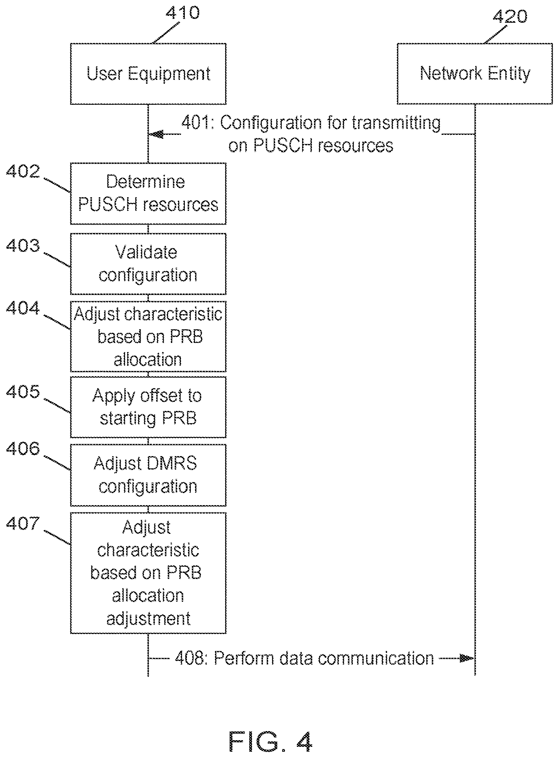

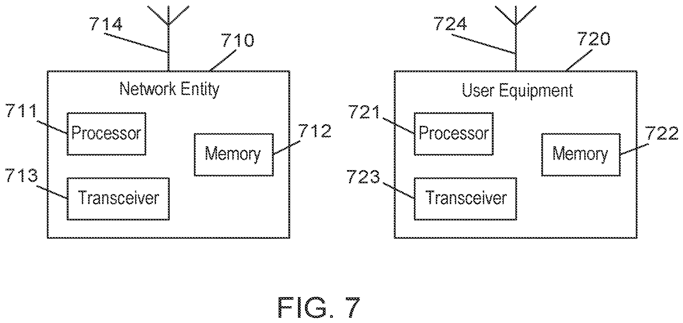

FIG. 4 illustrates an example of a signaling diagram depicting sharing PRACH and PUSCH resources when performing 2-step RA-based SDT procedures, such as for RedCap UE. UE 410 and NE 420 may be similar to UE 720 and NE 710, respectively, as illustrated in FIG. 7, according to certain example embodiments.

UE 410 may be configured to reserve UL resources for PUSCH (e.g., common set of resources). UL grants (*e.g*., time/frequency/BW given in *msgA-ConfigCommon*) may be used to inform UE 410 of reserved resources, similar to legacy procedure by Rel-17 RedCap UEs. The same UL grant may be used differently (*e.g*., adjusted based on UE capabilities) by Rel-18 RedCap UEs which support reduced BW of 5 MHz or reduced number of maximum physical resource blocks (PRBs). UE 410 may support a bandwidth smaller than the received physical uplink shared channel resources or number of PRBs smaller than the configured physical uplink shared channel resources. The reduced BW of 5 MHz may be seen as equivalent to defining the maximum of contiguous PRBs, *e.g*., 25 PRBs using 15 kHz sub-carrier spacing, or 11 PRBs using 30 kHz sub-carrier spacing.

At 401, NE 420 may transmit to UE 410 a configuration indicating PUSCH resources to be used, such as based on reduced BW support. In certain example embodiments, the indication may be transmitted via SIB and/or RRC configuration. For example, a new information element in SIB 1 may inform UE 410 to use the PUSCH allocation even though it is larger than the maximum BW of UE 410 (*i.e*., 5 MHz). As another example, the configuration may be received as part of a RRC Release message with suspend configuration that is received by NE 420 when suspending the RRC configuration. At 402, UE 410 may determine PUSCH resources based on reduced bandwidth, and an indication received from NE 420, on a predefined rule known to UE 410 (*e.g.*, using the first 25 PRBs of the PRB allocation, or otherwise), and/or the like.

At 403, UE 410 may validate the configuration received at 401 and determine whether the configuration indicates an MsgA configuration. Upon UE 410 determining that the MsgA configuration is valid, UE 410 may perform data communication (*e.g*., 2-step RA-based SDT). However, upon UE 410 determining that the MsgA configuration is invalid, UE 410 may determine whether the configuration indicates an MsgA adjustment. Upon UE 410 determining that an MsgA adjustment is indicated, UE 410 may perform SDT using other schemes (*e.g*., 4-step RACH SDT or configured grant (CG)-based SDT) and/or perform legacy RA procedures. However, upon UE 410 determining that an MsgA adjustment is not indicated, UE 410 may proceed to perform 404, as discussed next. It is noted that some example embodiments may also apply to 4-step SDT and configured grant type 1.

At 404, UE 410 may adjust a BW (*i.e*., a PRB) allocation or at least one characteristic of a PRB allocation. For example, the adjustment may be based on a predetermined number of PRBs, or may be based on a number of preambles mapped to PUSCH resources.

At 405, some embodiments may include a many-to-one mapping of preambles to PUSCH, wherein UE 410 may apply an offset to a starting PRB based on a preamble index. As an example, the PRB offset may be determined in a cyclic (*i.e*., modulo) manner.

In various example embodiments, UE 410 may determine the number of PRBs for transmission based on a guard band established for MsgA transmissions (*i.e*., *guardBandMsgA-PUSCH-r16*). In some embodiments where UE 410 comprises a Rel-18 20 MHz UE, UE 410 may transmit in multiple frequency regions.

At 406, UE 410 may use different DMRS configurations for Rel-17 UEs (not shown in FIG. 4) to enable NE 420 to differentiate between the two UE types. UE 410 may determine some of the configuration aspects of a DMRS MsgA configuration to be employed based on the Rel-17 *MsgA-DMRS-Config.* For example, UE 410 may determine the use of an additional DMRS location (*i.e.*, location not used by UE 410) if this is not configured for Rel-17 UEs. In certain example embodiments, UE 410 may be configured with specifications that could provide further rules for UE 410 to determine the DMRS configuration for this and other scenarios.

At 407, UE 410 may adjust at least one characteristic (*e.g.,* transport block size (TBS)) of the PRB allocation adjustment at 404 (i.e., number of PRBs determined for MsgA transmission). UE 410 may also retain the original MCS as configured by NE 420.

At 408, UE 410 may perform data communication (*e.g*., 2-step RA-based SDT) with NE 420 according to the adjusted at least one characteristic of the PRB allocation and/or DMRS configuration. In some example embodiments, UE 410 may also transmit an Msg1, and then an Msg3 that includes a small amount of data.

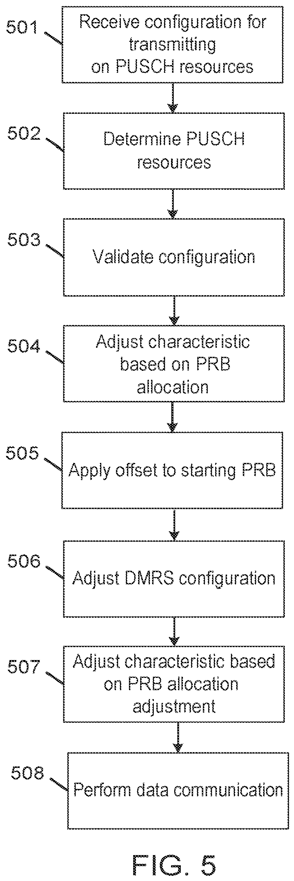

FIG. 5 illustrates an example of a flow diagram of a method that may be performed by a UE, such as UE 720 illustrated in FIG. 7, according to various example embodiments.

The UE may be configured to reserve UL resources for PUSCH (*e.g*., common set of resources). UL grants (*e.g.,* time/frequency/BW given in *msgA-ConfigCommon*) may be used to inform the UE of reserved resources, similar to legacy procedure by Rel-17 RedCap UEs. The same UL grant may be used differently (*e.g*., adjusted based on UE capabilities) by Rel-18 RedCap UEs which support reduced BW of 5 MHz or reduced number of maximum PRBs. The UE may support a bandwidth smaller than the received PUSCH resources or number of PRBs smaller than the configured PUSCH resources. The reduced BW of 5 MHz may be seen as equivalent to defining the maximum of contiguous PRBs, *e.g*., 25 PRBs using 15 kHz sub-carrier spacing, or 11 PRBs using 30 kHz sub-carrier spacing.

At 501, the method may include receiving, from a NE such as NE 710 illustrated in FIG. 7, a configuration indicating PUSCH resources to be used, such as based on reduced BW support. In certain example embodiments, the indication may be transmitted via SIB and/or RRC configuration. For example, a new information element in SIB1 may inform the UE to use the PUSCH allocation even though it is larger than the maximum BW of the UE (*i.e.,* 5 MHz). As another example, the configuration may be received as part of a RRC Release message with suspend configuration that is received by the NE when suspending the RRC configuration. At 502, the method may further include determining PUSCH resources based on reduced bandwidth, and an indication received from the NE, on a predefined rule known to the UE (*e.g.,* using the first 25 PRBs of the PRB allocation, or otherwise), and/or the like.

At 503, the method may include validating the configuration received at 501, and determining whether the configuration indicates an MsgA configuration. Upon the UE determining that the MsgA configuration is valid, the UE may perform data communication (*e.g*., 2-step RA-based SDT). However, upon the UE determining that the MsgA configuration is invalid, the UE may determine whether the configuration indicates an MsgA adjustment. Upon the UE determining that an MsgA adjustment is indicated, the UE may perform SDT using other schemes (*e.g*., 4-step RACH SDT or CG-based SDT) and/or perform legacy RA procedures. However, upon the UE determining that an MsgA adjustment is not indicated, the UE may proceed to perform 504, as discussed next. It is noted that some example embodiments may also apply to 4-step SDT and configured grant type 1.

At 504, the method may include adjusting a BW (*i.e.*, PRB) allocation or at least one characteristic of a PRB allocation. For example, the adjustment may be based on a predetermined number of PRBs, or may be based on a number of preambles mapped to PUSCH resources.

At 505, some embodiments may include a many-to-one mapping of preambles to PUSCH, wherein the method may include applying an offset to a starting PRB based on a preamble index. As an example, the PRB offset may be determined in a cyclic (*i.e.*, modulo) manner.

In various example embodiments, the UE may determine the number of PRBs for transmission based on a guard band established for MsgA transmissions (*i.e*., *guardBandMsgA-PUSCH-r16*). In some embodiments where the UE comprises a Rel-18 20 MHz UE, the UE may transmit in multiple 5 MHz regions.

At 506, the method may include using different DMRS configurations for Rel-17 UEs to enable the NE to differentiate between the two UE types. The UE may determine some of the configuration aspects of a DMRS MsgA configuration to be employed based on the Rel-17 *MsgA-DMRS-Config.* For example, the UE may determine the use of an additional DMRS location (*i.e.*, location not used by the UE) if this is not configured for Rel-17 UEs. In certain example embodiments, the UE may be configured with specifications that could provide further rules for the UE to determine the DMRS configuration for this and other scenarios.

At 507, the method may include adjusting at least one characteristic (*e.g*., TBS) of the PRB allocation adjustment at 504 (*i.e.*, number of PRBs determined for MsgA transmission). The method may also include retaining the original MCS as configured by the NE.

At 508, the method may include performing data communication (*e.g*., 2-step RA-based SDT) with the NE according to the adjusted at least one characteristic of the PRB allocation and/or DMRS configuration. The UE may transmit an Msg1, and then an Msg3 that includes a small amount of data.

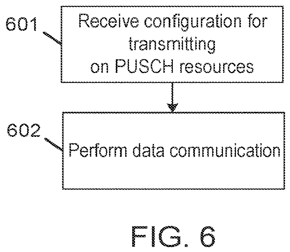

FIG. 6 illustrates an example of a flow diagram of a method that may be performed by a NE, such as NE 710 illustrated in FIG. 7, according to various example embodiments.

A UE, such as UE 720 illustrated in FIG. 7, may be configured to reserve UL resources for PUSCH (*e.g*., common set of resources). UL grants (*e.g*., time/frequency/BW given in *msgA-ConfigCommon*) may be used to inform the UE of reserved resources, similar to legacy procedure by Rel-17 RedCap UEs. The same UL grant may be used differently (*e.g*., adjusted based on UE capabilities) by Rel-18 RedCap UEs which support reduced BW of 5 MHz or reduced number of maximum PRBs. The UE may support a bandwidth smaller than the received PUSCH resources or number of PRBs smaller than the configured PUSCH resources. The reduced BW of 5 MHz may be seen as equivalent to defining the maximum of contiguous PRBs, *e.g.,* 25 PRBs using 15 kHz sub-carrier spacing, or 11 PRBs using 30 kHz sub-carrier spacing.

At 601, the method may include transmitting, to the UE, a configuration indicating PUSCH resources to be used, such as based on reduced BW support. In certain example embodiments, the indication may be transmitted via SIB and/or RRC configuration. For example, a new information element in SIB1 may inform the UE to use the PUSCH allocation even though it is larger than the maximum BW of the UE (*i.e.,* 5 MHz). As another example, the configuration may be transmitted as part of a RRC Release message with suspend configuration that is received by the NE when suspending the RRC configuration. It is noted that some example embodiments may also apply to 4-step SDT and configured grant type 1.

At 602, the method may include performing data communication (*e.g.,* 2-step RA-based SDT) with the UE according to an adjusted PRB allocation and DMRS configuration. The NE may receive an Msg1, and then an Msg3 that includes a small amount of data.

FIG. 7 illustrates an example of a system according to certain example embodiments. In one example embodiment, a system may include multiple devices, such as, for example, NE 710 and/or UE 720.

NE 710 may be one or more of a base station (*e.g.,* 3G UMTS NodeB, 4G LTE Evolved NodeB, or 5G NR Next Generation NodeB), a serving gateway, a server, and/or any other access node or combination thereof.

NE 710 may further comprise at least one gNB-centralized unit (CU), which may be associated with at least one gNB-distributed unit (DU). The at least one gNB-CU and the at least one gNB-DU may be in communication via at least one F1 interface, at least one Xₙ-C interface, and/or at least one NG interface via a 5^{th} generation core (5GC).

UE 720 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, NE 710 and/or UE 720 may be one or more of a citizens broadband radio service device (CBSD).

NE 710 and/or UE 720 may include at least one processor, respectively indicated as 711 and 721. Processors 711 and 721 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 712 and 722. The memory may be fixed or removable. The memory may include computer program instructions or computer code contained therein. Memories 712 and 722 may independently be any suitable storage device, such as a non-transitory computer-readable medium. The term "non-transitory," as used herein, may correspond to a limitation of the medium itself (*i.e.,* tangible, not a signal) as opposed to a limitation on data storage persistency (*e.g.,* random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 711 and 721, memories 712 and 722, and any subset thereof, may be configured to provide means corresponding to the various blocks of FIGs. 4-6. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 7, transceivers 713 and 723 may be provided, and one or more devices may also include at least one antenna, respectively illustrated as 714 and 724. The device may have many antennas, such as an array of antennas configured for multiple input multiple output (MIMO) communications, or multiple antennas for multiple RATs. Other configurations of these devices, for example, may be provided. Transceivers 713 and 723 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.,* FIGs. 4-6). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 4-6. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g.,* firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

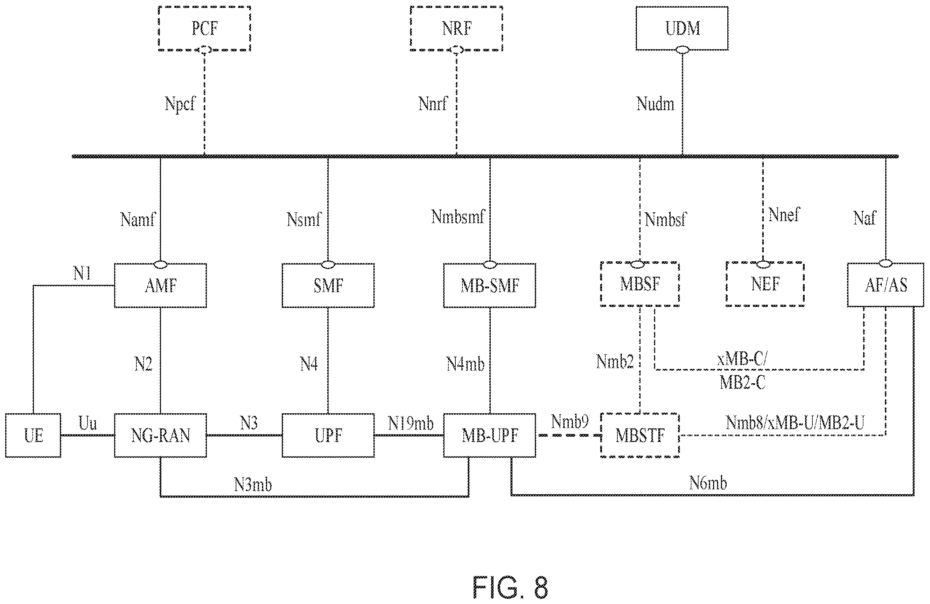

FIG. 8 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 8 may be similar to NE 710 and UE 720, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processors 711 and 721, and memories 712 and 722, may be included in or may form a part of processing circuitry or control circuitry. In addition, in some example embodiments, transceivers 713 and 723 may be included in or may form a part of transceiving circuitry.

In some example embodiments, an apparatus (*e.g.,* NE 710 and/or UE 720) may include means for performing a method, a process, or any of the variants discussed herein. Examples of the means may include one or more processors, memory, controllers, transmitters, receivers, and/or computer program code for causing the performance of the operations.

In various example embodiments, apparatus 710 may be controlled by memory 712 and processor 711 to receive, from a network entity, a configuration indicating physical uplink shared channel resources; determine physical uplink shared channel resources based on at least one of reduced bandwidth or reduced physical resource blocks; adjust at least one characteristic of a physical resource block allocation based on the physical uplink shared channel resources and reduced bandwidth; and perform data communication based on the adjusted at least one characteristic of the physical resource block allocation.

Certain example embodiments may be directed to an apparatus that includes means for performing any of the methods described herein including, for example, means for receiving, from a network entity, a configuration indicating physical uplink shared channel resources; means for determining physical uplink shared channel resources based on at least one of reduced bandwidth or reduced physical resource blocks; means for adjusting at least one characteristic of a physical resource block allocation based on the physical uplink shared channel resources and reduced bandwidth; and means for performing data communication based on the adjusted at least one characteristic of the physical resource block allocation.

In various example embodiments, apparatus 710 may be controlled by memory 712 and processor 711 to transmit, to a user equipment, a configuration indicating usage of physical uplink shared channel resources with reduced bandwidth.

Certain example embodiments may be directed to an apparatus that includes means for performing any of the methods described herein including, for example, means for transmitting, to a user equipment, a configuration indicating usage of physical uplink shared channel resources with reduced bandwidth.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- 3GPP: 3rd Generation Partnership Project
- 5G: 5th Generation
- SGC: 5th Generation Core
- 6G: 6th Generation
- AF: Application Function
- ASIC: Application Specific Integrated Circuit
- BW: Bandwidth
- BWP: Bandwidth Part
- CBSD: Citizens Broadband Radio Service Device
- CG: Configured Grant
- cmWave: Centimeter Wave
- CPU: Central Processing Unit
- CSI: Channel State Information
- CU: Centralized Unit
- DL: Downlink
- DMRS: Demodulation Reference Signal
- DU: Distributed Unit
- eMBB: Enhanced Mobile Broadband
- eNB: Evolved Node B
- eRedCap: Enhanced Reduced Capability
- FDD: Frequency Division Duplex
- FR: Frequency Range
- gNB: Next Generation Node B
- GPS: Global Positioning System
- HDD: Hard Disk Drive
- IoT: Internet of Things
- KA: Keepalive
- LTE: Long-Term Evolution
- LTE-A: Long-Term Evolution Advanced
- MCS: Modulation and Coding Scheme
- MEMS: Micro Electrical Mechanical System
- MHz: Megahertz
- MIMO: Multiple Input Multiple Output
- mMTC: Massive Machine Type Communication
- mmWave: Millimeter Wave
- NG: Next Generation
- NG-eNB: Next Generation Evolved Node B
- NG-RAN: Next Generation Radio Access Network
- NR: New Radio
- PDA: Personal Digital Assistance
- PDSCH: Physical Downlink Shared Channel
- PRACH: Physical Random Access Channel
- PRB: Physical Resource Block
- PUSCH: Physical Uplink Shared Channel
- QAM: Quadrature Amplitude Modulation
- QoS: Quality of Service
- RA: Radio Access
- RACH: Radio Access Channel
- RAM: Random Access Memory
- RAN: Radio Access Network
- RAR: Random Access Response
- RAT: Radio Access Technology
- RedCap: Reduced Capability
- RF: Radio Frequency
- RO: Random Access Channel Occasion
- ROM: Read-Only Memory
- RRC: Radio Resource Control
- Rx: Receiver
- SDT: Small Data Transmission
- SIB: System Information Block
- TBS: Transport Block Size
- TDD: Time Division Duplex
- TR: Technical Report
- UL: Uplink
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network

## Claims

1. An apparatus comprising:
means for receiving, from a network entity, a configuration indicating physical uplink shared channel resources;
means for determining physical uplink shared channel resources based on at least one of reduced bandwidth or reduced physical resource blocks;
means for adjusting at least one characteristic of a physical resource block allocation based on the physical uplink shared channel resources and reduced bandwidth; and
means for performing data communication based on the adjusted at least one characteristic of the physical resource block allocation.

2. The apparatus of claim 1, wherein the apparatus supports a bandwidth smaller than the physical uplink shared channel resources configured.

3. The apparatus of any of claims 1 or 2, wherein the configuration is received via system information block, radio resource control configuration, or radio resource control release message.

4. The apparatus of any of claims 1-3, wherein the data transmission comprises random access procedure.

5. The apparatus of any of claims 1-4, wherein the data transmission comprises small data transmission.

6. The apparatus of any of claims 1-5, wherein the configuration indicating the physical uplink shared channel resources are based on reduced bandwidth.

7. The apparatus of any of claims 1-6, wherein the adjustment is based on a predetermined number of physical resource blocks.

8. The apparatus of any of claims 1-7, wherein the adjustment is based on a number of preambles mapped to physical uplink shared channel resources.

9. The apparatus of any of claims 1-8, further comprising:
means for applying an offset to a starting physical resource block based on a preamble index.

10. The apparatus of any of claims 1-9, further comprising:
means for adjusting at least one characteristic of a demodulation reference signal configuration.

11. The apparatus of any of claims 1-10, further comprising:
means for adjusting at least one transport block size based on the physical resource block allocation adjustment.

12. The apparatus of any of claims 1-11, further comprising:
means for retaining at least one existing modulation and coding scheme configured by the network entity.

13. The apparatus of claim 12, wherein the configuration is transmitted via system information block, radio resource control configuration, or radio resource control release message.

14. A method comprising:
receiving, by a user equipment, from a network entity, a configuration indicating physical uplink shared channel resources;
determining physical uplink shared channel resources based on at least one of reduced bandwidth or reduced physical resource blocks;
adjusting at least one characteristic of a physical resource block allocation based on the physical uplink shared channel resources and reduced bandwidth; and
performing data communication based on the adjusted at least one characteristic of the physical resource block allocation.

15. A method comprising:
transmitting, to a user equipment, a configuration indicating usage of physical uplink shared channel resources with reduced bandwidth.
